# FASCICULE DE BREVET EUROPEEN

(11) **EP 4 323 077 B1**
(45) Date de publication et mention de la délivrance du brevet: **28.10.2026**
(21) Numéro de dépôt: 22720042.5
(22) Date de dépôt: 15.04.2022
(51) Int. Cl.: A63C 19/10, F25B 9/00, F25B 29/00, F25C 3/02

(54) **PATINOIRE A RÉTENTION D'ÉNERGIE FRIGORIFIQUE PAR MATÉRIAU A CHANGEMENT DE PHASE**
EISBAHN MIT KÄLTEENERGIESPEICHERUNG DURCH PHASENWECHSELMATERIAL
ICE RINK WITH COOLING ENERGY RETENTION BY PHASE CHANGE MATERIAL

(30) Priorité: 16.04.2021 FR 2103962
(43) Date de publication de la demande: 21.02.2024
(73) Titulaire: Sun-Ice Energy PTE. LTD., Singapore 627699 (SG)
(72) Inventeur: MOUCHET, Jacques, 78340 Les Clayes-sous-Bois (FR)
(74) Mandataire: AtlantIP International
(86) Numéro de dépôt international: PCT/IB2022/053572
(87) Numéro de publication internationale: WO 2022/219602

(56) Documents cités:
- CN-A- 106 320 138
- CN-U- 205 223 791
- GB-A- 2 415 243
- US-A- 4 294 078

## Description

La présente invention concerne une patinoire artificielle couverte comprenant un bâtiment fermé, tel qu'une tente ou un dôme construit sur une dalle destinée à être recouverte par de la glace. Ladite dalle destinée à être recouverte de glace (eau gelée) permet ainsi la pratique de tout type de sport de glisse, tel que du patinage, du curling, du hockey sur glace, etc.

On connaît déjà plusieurs types de patinoires artificielles comportant des dalles, réalisées en divers matériaux, comprenant des dispositifs de réfrigération afin de refroidir suffisamment l'eau répandue à la surface de la dalle pour la transformer en glace.

Dans certaines réalisations connues, de telles dalles comprennent une couche incorporant des canaux de circulation d'un fluide frigorigène, tel qu'un liquide frigorifique, disposés en réseau et raccordés à un groupe frigorifique qui fait circuler un liquide réfrigérant dans lesdits canaux de circulation.

Afin de limiter les inévitables déperditions du froid créé par les groupes frigorifiques, il est connu d'isoler thermiquement la dalle en prévoyant de disposer, entre cette dernière et le sol primaire, une couche d'isolant thermique. L'absence d'une telle couche d'isolant thermique conduit, à des déperditions thermiques importantes. Dans certains cas sous cette couche isolante on fait passer de l'eau chaude pour éviter de faire geler le sol primaire.

Cependant, malgré ces mesures, les patinoires artificielles connues dans l'état actuel de la technique se caractérisent par d'importantes déperditions thermiques nécessitant le fonctionnement permanent, c'est-à-dire jour et nuit, de groupes frigorifiques puissants et, par conséquent, coûteux. De plus, il est difficile de maintenir la glace en bon état puisque sa surface supérieure est en contact avec l'air ambiant de la patinoire, souvent humide, du fait de la présence de patineurs et du public.

Par ailleurs, le patin à glace et ses dérivés (hockey, patinage artistique, etc.) sont des activités de plus en plus prisées et on peut observer une augmentation du nombre de patinoires construites dans le monde, plus particulièrement dans certains pays d'Asie.

Malheureusement, comme évoqué précédemment, une patinoire nécessite une importante quantité d'énergie permanente pour maintenir une grande quantité d'eau sous forme de glace, afin que les gens puissent patiner dans de bonnes conditions.
Cette consommation d'énergie est d'autant plus importante dans les pays présentant des climats chauds et/ou tropicaux, dans lesquels les températures extérieures sont usuellement supérieures à 20°C et rarement en dessous de 0°C.

Il est ainsi connu du document GB2415243 A d'avoir un bâtiment hébergeant une patinoire qui comporte un système de gestion énergétique intégrant un matériau à changement de phase pour stocker des frigories.

Un des buts de la présente invention est par conséquent de remédier aux inconvénients précités, et de proposer une patinoire artificielle couverte permettant notamment d'exploiter par exemple un réseau de panneaux solaires permettant d'accumuler l'énergie produite le jour pour maintenir la qualité de la glace pendant la nuit, ceci afin de conserver une glace de qualité constante sur toute la surface de patinage, et qui soit d'une construction simple, fiable, d'un coût de fonctionnement relativement modéré, notamment plus économe au niveau de sa consommation énergétique.

La présente invention couvre aussi l'utilisation de matériaux à changement de phase incorporés dans une réserve extérieure au sol de la patinoire.

Ainsi, la présente invention permet de réaliser un nouveau type de patinoire utilisant des sources intermittentes d'énergie, par exemple des panneaux solaires.

Ladite invention est donc une patinoire artificielle couverte selon la revendication 1.

La présente invention propose de disposer la dalle de la patinoire sur une couche supplémentaire incorporant des matériaux à changement de phase servant de « réserve frigorifique » pour permettre le maintien de la qualité de la couche de glace pendant une durée suffisante, notamment pour permettre l'arrêt nocturne des compresseurs du dispositif de réfrigération.

On notera qu'on entend par matériau à changement de phase (ou PCM en langue anglaise pour « Phase-Change Material »), tout matériau capable de changer d'état physique dans une plage de température restreinte, préférentiellement négative, par exemple aux alentours de -15 degrés Celsius.

On notera qu'on entend par fluide frigorigène (ou réfrigérant), un fluide qui permet la mise en œuvre d'un cycle frigorifique. Ledit fluide peut être pur ou être un mélange de fluides en phase liquide, gazeuse ou les deux à la fois en fonction des conditions de température et de pression. Le fluide absorbe avantageusement la chaleur à basse température et basse pression, puis libère la chaleur à une température et une pression plus élevées, par exemple lors d'un changement d'état physique.

Selon une autre caractéristique possible, le ou les matériaux à changement peuvent être contenus dans des réservoirs placés sous la dalle avec un « ciel gazeux » permettant de tolérer sans déformation notable le changement de volume consécutif au changement de phase.

Selon une autre caractéristique possible, le refroidissement des matériaux à changement de phase peut être obtenu directement par le réseau réfrigérant dans lequel circule le fluide frigorifique (par exemple du glycol) disposé sous la dalle ou par un autre réseau frigorifique distinct.

Selon l'invention, la dalle comprend au moins deux couches :
- une première couche de support destinée à être recouverte par de la glace ;
- une deuxième couche comprenant ledit matériau à changement de phase.

Selon une autre caractéristique possible, la première couche repose directement sur ladite deuxième couche.
On notera qu'on entend par « directement », le fait que les transferts de chaleur entre les première et deuxième couches ne sont pas altérés par un élément annexe, et donc que la conductivité thermique est essentiellement basée sur les valeurs respectives de conductivité thermique des première et deuxième couches.

Selon une autre caractéristique possible, ladite dalle comprend une troisième couche, dite couche intermédiaire, séparant la première couche de la deuxième couche.

Selon une autre caractéristique possible, la troisième couche comprend elle-même deux strates :
- une première strate qui est réalisée dans un matériau de construction à grande résistance, tel que du béton, et qui est traversée par des tubes constituant ledit réseau réfrigérant ;
- une deuxième strate réalisée en un matériau thermiquement conducteur, tel qu'un matériau métallique, ladite deuxième strate étant interposée entre la deuxième couche et la première strate.

Selon une autre caractéristique possible, le réseau de réfrigération comprend un ou plusieurs tubes traversant ladite deuxième couche et/ou troisième couche.

Selon une autre caractéristique possible, ladite dalle comprend une couche d'isolant thermique.

Selon une autre caractéristique possible, le matériau à changement de phase présente une température de fusion comprise entre -5°C et -25°C, et de préférence entre -10°C et -20°C.

Selon une autre caractéristique possible, la patinoire comprend des panneaux photovoltaïques destinés à alimenter électriquement ledit dispositif de réfrigération.

Selon une autre caractéristique possible, ledit fluide frigorigène comprend du glycol.

Selon une autre caractéristique possible, ladite patinoire comprend une batterie de stockage électrique.

Selon une autre caractéristique possible, ledit bâtiment est isolé thermiquement, notamment par l'intermédiaire de matériaux isolant thermiquement.

Selon une autre caractéristique possible, le dispositif de réfrigération est configuré pour être alimenté au moins en partie par lesdits panneaux photovoltaïques et/ou par ladite batterie de stockage.

Selon une autre caractéristique possible, le dispositif de réfrigération comporte au moins un mode de fonctionnement dans lequel ledit dispositif de réfrigération ne refroidit que l'air situé au-dessus de la dalle recouverte de glace.

Les pompes, compresseurs et autres moyens dudit dispositif de réfrigération permettant de faire circuler le fluide frigorigène sont donc à l'arrêt pour économiser de l'énergie, le matériau à changement de phase permettant de maintenir la glace à une température inférieure à sa température de fusion.

L'invention sera mieux comprise, et d'autres buts, détails, caractéristiques et avantages de celles-ci apparaîtront plus clairement au cours de la description suivante de modes de réalisation particuliers de l'invention, donnée uniquement à titre illustratif et non limitatif, en référence aux dessins annexés, sur lesquels :
- la figure 1, référencée [Fig. 1], est une représentation très schématique en coupe d'une patinoire selon l'invention ;
- la figure 2, référencée [Fig. 2], est une représentation schématique et en coupe d'un premier mode de réalisation, dit mode direct, de la dalle de la patinoire de la figure 1 ;
- la figure 3, référencée [Fig. 3], est une représentation schématique et en coupe d'un deuxième mode de réalisation, dit mode indirect, de la dalle de la patinoire de la figure 1.

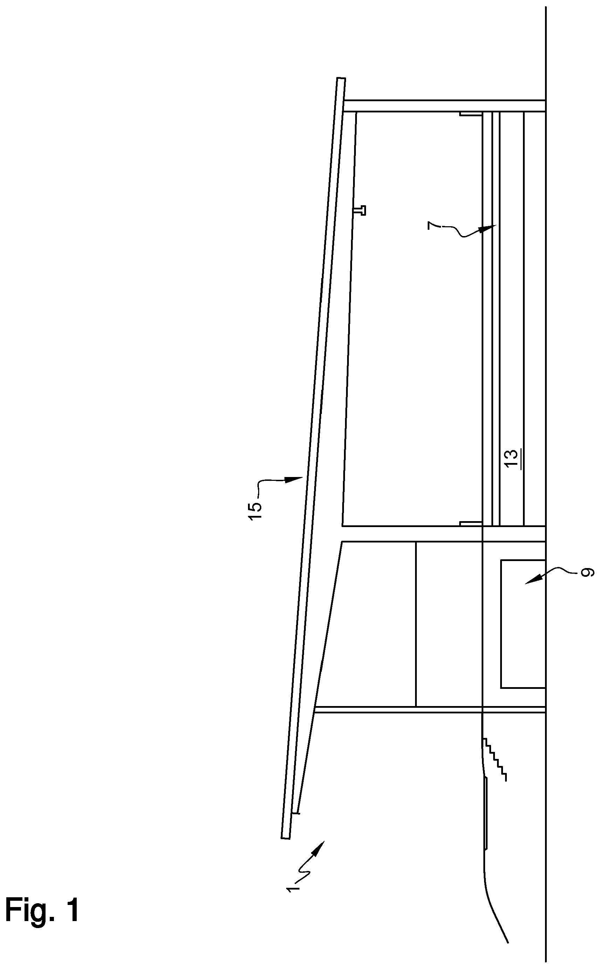

La [Fig. 1] est ainsi une représentation schématique en coupe d'une patinoire 1 selon l'invention.

Ladite patinoire 1 est une patinoire artificielle couverte composée d'un bâtiment 3 fermé construit sur une dalle 5 destinée à être recouverte par de la glace 7.

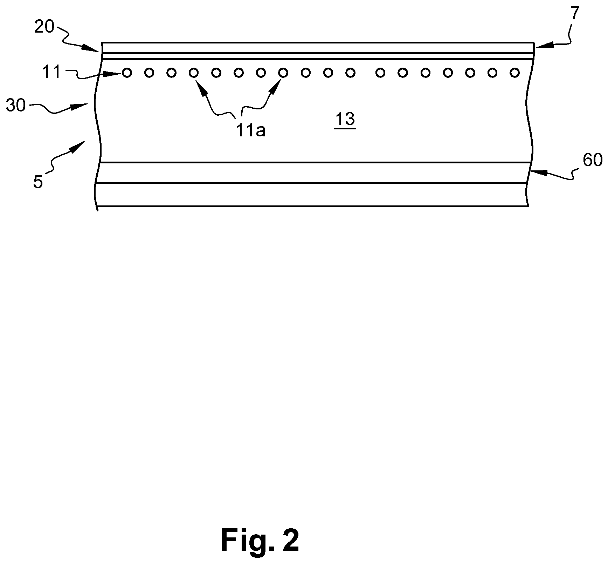

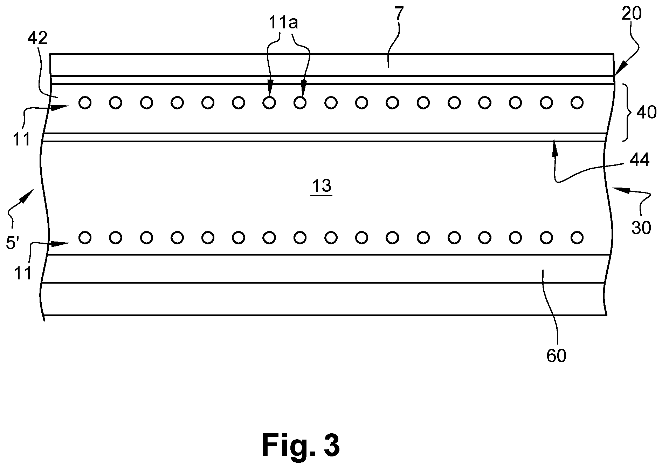

Ladite patinoire 1 comprend notamment :
- un dispositif de réfrigération 9 connecté à un réseau réfrigérant 11 (plus particulièrement visibles aux figures 2 et 3) dans lequel circule un fluide frigorigène, tel que du glycol ou de l'eau glycolée ;
- un matériau à changement de phase 13 relié audit dispositif de réfrigération 9 par l'intermédiaire dudit réseau réfrigérant 11. Plus particulièrement et toujours en référence aux figures 2 et 3, le réseau réfrigérant 11 est noyé dans le matériau à changement de phase 13 assurant ainsi la liaison entre ledit matériau réfrigérant 13 et le dispositif de réfrigération 9.

Ledit matériau à changement de phase 13 est notamment configuré pour maintenir la glace recouvrant la dalle 5 à une température inférieure à la température de fusion de la glace, généralement aux environs de 0°C. Pour cela, ledit matériau à changement de phase 13 présente une température de fusion comprise entre -5°C et -25°C, et de préférence comprise entre -10°C et -20°C.

Ladite patinoire 1 comprend avantageusement des panneaux photovoltaïques 15 (ou solaires) et une batterie de stockage d'énergie électrique. Lesdits panneaux photovoltaïques 15 sont disposés sur le toit du bâtiment de la patinoire 1 ou sont intégrés à un toit solaire.

Le dispositif de réfrigération 9 est par exemple un ensemble d'échangeurs de chaleur, pompe(s), compresseur(s), et tubes 11a du réseau réfrigérant 11 permettant de réaliser un cycle thermodynamique (tel qu'un cycle de Carnot, de Rankine, etc.) dans lequel il y a échange de calories entre l'intérieur et l'extérieur de la patinoire 1. La pompe ou le compresseur dudit dispositif de réfrigération 9 fait notamment circuler le fluide frigorigène dans lesdits échangeurs de chaleur et les tubes 11a du réseau réfrigérant 11.

Plus particulièrement, le dispositif de réfrigération 9 est configuré pour évacuer des calories vers l'extérieur de la patinoire 1, afin que le fluide frigorigène capte au mieux les calories stockées dans la dalle 5, notamment lorsque ledit fluide frigorigène circule dans les tubes 11a situés dans la dalle 5.

Lesdits panneaux photovoltaïques 15, quant à eux, peuvent alimenter en électricité les différents éléments de la patinoire 1 consommant de l'énergie électrique, notamment le dispositif de réfrigération 9 et ses sous-éléments. De plus, si la production électrique des panneaux photovoltaïques 15 est supérieure à la consommation en électricité de la patinoire 1, une batterie de stockage est configurée pour emmagasiner l'excès d'énergie ainsi générée pour une utilisation ultérieure, par exemple la nuit lorsque l'ensoleillement est insuffisant.

La figure 2 est une vue schématique et en coupe d'un premier mode de réalisation de la dalle 5 de patinoire 1 selon l'invention.

Ladite dalle 5 comprend ainsi :
- une première couche de support 20 destinée à être recouverte par de la glace 7 ;
- une deuxième couche 30 comprenant ledit matériau à changement de phase 13.

Ce premier de mode de réalisation est dit « mode direct », car la première couche 20 repose directement sur la deuxième couche 30, c'est-à-dire qu'il n'y pas de couches intermédiaires entre la première couche 20 et la deuxième couche 30.

La deuxième couche 30 comprend une épaisseur de matériau à changement de phase 13 et est traversée par des tubes 11a du réseau réfrigérant 11.

La première couche 20, quant à elle, est réalisée dans un matériau adapté pour être enserré entre une couche de glace 7 et la deuxième couche 30. On entend par matériau « adapté » un matériau présentant des caractéristiques mécaniques le rendant apte à supporter (donc sans se fissurer et/ou se déformer) les contraintes exercées par la couche de glace 7 et la deuxième couche 30, notamment les variations de volumes dues à la dilatation thermique de la couche de glace 7 et de la deuxième couche 30.

Une couche d'isolant thermique 60 est avantageusement disposée en dessous de la deuxième couche 30, afin d'isoler thermiquement la couche de support 20 et la couche de matériau à changement de phase 30 de l'extérieur de la patinoire 1 (et également du sol primaire).

La figure 3 est une vue schématique et en coupe d'un deuxième mode de réalisation, dit « mode indirect », de la dalle 5' de patinoire 1 selon l'invention.
On notera que les éléments identiques ou similaires portent ainsi les mêmes références que sur les figures des précédents modes de réalisation et ne seront donc pas à nouveau détaillés.

Ainsi, ladite dalle 5' comprend :
- une première couche de support 20 destinée à être recouverte par une couche de glace 7 ;
- une deuxième couche 30 comprenant ledit matériau à changement de phase 13 ;
- une troisième couche 40, dite couche intermédiaire, séparant la première couche 20 de la deuxième couche 30.

Plus particulièrement, ladite troisième couche 40 comprend elle-même deux strates 42 et 44 :
- une première strate 42 qui est réalisée dans un matériau de construction à grande résistance, tel que du béton, et qui est traversée par des tubes 11a dudit réseau réfrigérant 11 ;
- une deuxième strate 44 réalisée en un matériau thermiquement conducteur, tel qu'un matériau métallique, par exemple de l'aluminium. Ladite deuxième strate 44 est interposée entre la deuxième couche 30 et la première strate 42, afin de séparer physiquement la première strate 42 du matériau à changement de phase 13.

Comme précédemment, des tubes 11a constituant le réseau réfrigérant 11 traversent la deuxième couche 30, c'est-à-dire que lesdits tubes 11a sont noyés dans le matériau à changement de phase 13. De plus, des tubes 11a constituant le réseau 11 traversent également la troisième couche 40. Les tubes 11a sont avantageusement configurés pour que le fluide frigorigène, transporté au travers de ces tubes 11a, circule d'abord à travers la deuxième couche 30, puis ensuite au travers de la troisième couche 40 (le but étant de refroidir le fluide avant que celui-ci ne traverse la troisième couche).

Quel que soit le mode de réalisation de la dalle 5, 5', le bâtiment de la patinoire 1est fermé et isolé thermiquement, par exemple au moyen d'un matériau isolant thermiquement.

Avantageusement, le dispositif de réfrigération 9 comprend un système de climatisation configuré pour refroidir l'air situé au-dessus de la dalle 5, 5' de la patinoire 1.

De plus, le dispositif de réfrigération 9 est configuré pour avoir au moins deux modes de fonctionnement :
- un premier mode de fonctionnement, dit « mode jour », dans lequel les calories excédentaires sont stockées et/ou dissipées dans le matériau à changement de phase 13 et/ou par les échangeurs de chaleur dudit dispositif de réfrigération 9 ;
- un deuxième mode de fonctionnement, dit « mode nuit », dans lequel l'air situé au-dessus de la dalle 5, 5 ' est refroidi au mieux par l'intermédiaire du système de climatisation et dans lequel les frigories contenues dans le matériau de changement de phase 13 permettent de maintenir la glace recouvrant ladite dalle 5, 5' à une température inférieure à la sa température de fusion.

Lorsque le deuxième mode de fonctionnement est mis en œuvre, la ou les pompes et compresseurs dudit dispositif de réfrigération 9 sont à l'arrêt, ceci pour minimiser la consommation électrique de la patinoire.

Ainsi, le « mode nuit » permet de stocker des frigories dans le matériau à changement de phase 13. Les frigories ainsi stockées sont utilisables ultérieurement, par exemple en journée, lorsqu'il y a des patineurs sur la dalle 5, 5' et qu'il n'est pas possible de refroidir suffisamment l'air au-dessus la couche de glace dédiée au patinage.

## Revendications

1. Patinoire (1) artificielle couverte composée d'un bâtiment fermé construit sur une dalle (5) destinée à être recouverte par de la glace, la patinoire (1) comprenant :
- un dispositif de réfrigération (9) connecté à un réseau réfrigérant (11) dans lequel circule un fluide frigorigène ;
- un matériau à changement de phase (13) relié audit dispositif de réfrigération (9) par l'intermédiaire dudit réseau réfrigérant (11) ;
ledit matériau à changement de phase (13) étant configuré pour maintenir la glace (7) recouvrant la dalle à une température inférieure à la température de fusion de la glace,
**caractérisé en ce que** la dalle (5) comprend au moins deux couches :
- une première couche (20) de support destinée à être recouverte par de la glace ;
- une deuxième couche (30) comprenant ledit matériau à changement de phase (13).

2. Patinoire (1) selon l'une quelconque des revendications précédentes, **caractérisée en ce que** la première couche (20) repose directement sur ladite deuxième couche (30).

3. Patinoire selon la revendication 1, **caractérisée en ce que** ladite dalle (5') comprend une troisième couche (40), dite couche intermédiaire, séparant la première couche (20) de la deuxième couche (30).

4. Patinoire selon la revendication 3, **caractérisée en ce que** la troisième couche (30) comprend elle-même deux strates :
- une première strate (42) qui est réalisée dans un matériau de construction à grande résistance et qui est traversée par des tubes constituant ledit réseau réfrigérant ;
- une deuxième strate (44) réalisée en un matériau thermiquement conducteur ladite deuxième strate (44) étant interposée entre la deuxième couche (30) et la première strate (42).

5. Patinoire (1) selon l'une quelconque des revendications 2 à 4, **caractérisé en ce que** le réseau de réfrigération comprend un ou plusieurs tubes (11a), 11), traversant ladite deuxième couche (30) et/ou troisième couche (40).

6. Patinoire (1) selon l'une quelconque des revendications précédentes, **caractérisée en ce que** le matériau à changement de phase (13) présente une température de fusion comprise entre -5°C et -25°C, et de préférence entre -10°C et -20°C.

7. Patinoire (1) selon l'une quelconque des revendications précédentes, **caractérisée en ce que** la patinoire (1) comprend des panneaux photovoltaïques (15) destinés à alimenter électriquement ledit dispositif de réfrigération (9).

8. Patinoire (1) selon l'une quelconque des revendications précédentes, **caractérisée en ce qu'**elle comprend une batterie de stockage électrique.

9. Patinoire selon l'une quelconque des revendications précédentes, **caractérisée en ce que** le dispositif de réfrigération (9) est configuré pour être alimenté au moins en partie par lesdits panneaux photovoltaïques (15) et/ou par ladite batterie de stockage

## Patentansprüche

1. Überdachte künstliche Eislaufbahn (1), die aus einem geschlossenen Gebäude, das auf einer Bodenplatte (5) errichtet ist, die dazu bestimmt ist, mit Eis bedeckt zu werden, besteht, wobei die Eislaufbahn (1) Folgendes umfasst:
- eine Kühlvorrichtung (9), die mit einem Kältemittelnetz (11), in dem ein Kältefluid zirkuliert, verbunden ist;
- ein Phasenwechselmaterial (13), das über das Kältemittelnetz (11) mit der Kühlvorrichtung (9) verbunden ist;
wobei das Phasenwechselmaterial (13) dazu konfiguriert ist, das die Bodenplatte bedeckende Eis (7) auf einer Temperatur unterhalb der Schmelztemperatur des Eises zu halten,
**dadurch gekennzeichnet, dass** die Bodenplatte (5) mindestens zwei Schichten umfasst:
- eine erste Trägerschicht (20), die dazu bestimmt ist, mit Eis bedeckt zu werden;
- eine zweite Schicht (30), die das Phasenwechselmaterial (13) umfasst.

2. Eislaufbahn (1) nach einem der vorstehenden Ansprüche, **dadurch gekennzeichnet, dass** die erste Schicht (20) direkt auf der zweiten Schicht (30) ruht.

3. Eislaufbahn nach Anspruch 1, **dadurch gekennzeichnet, dass** die Bodenplatte (5) eine dritte Schicht (40), als Zwischenschicht bezeichnet, die die erste Schicht (20) von der zweiten Schicht (30) trennt, umfasst.

4. Eislaufbahn nach Anspruch 3, **dadurch gekennzeichnet, dass** die dritte Schicht (40) selbst zwei Lagen umfasst:
- eine erste Lage (42), die aus einem hochfesten Baumaterial realisiert ist und von Röhren durchquert wird, die das Kältemittelnetz bilden;
- eine zweite Lage (44), die aus einem wärmeleitfähigen Material realisiert ist, wobei die zweite Lage (44) zwischen der zweiten Schicht (30) und der ersten Schicht (42) eingefügt ist.

5. Eislaufbahn (1) nach einem der Ansprüche 2 bis 4, **dadurch gekennzeichnet, dass** das Kältenetz eine oder mehrere Röhren (11a), 11) umfasst, die die zweite Schicht (30) und/oder dritte Schicht (40) durchqueren.

6. Eislaufbahn (1) nach einem der vorstehenden Ansprüche, **dadurch gekennzeichnet, dass** das Phasenwechselmaterial (13) eine Schmelztemperatur zwischen -5 °C und -25 °C und bevorzugt zwischen -10 °C und -20 °C aufweist.

7. Eislaufbahn (1) nach einem der vorstehenden Ansprüche, **dadurch gekennzeichnet, dass** die Eislaufbahn (1) Fotovoltaikmodule (15) umfasst, die dazu bestimmt sind, die Kühlvorrichtung (9) elektrisch zu versorgen.

8. Eislaufbahn (1) nach einem der vorstehenden Ansprüche, **dadurch gekennzeichnet, dass** sie eine Stromspeicherbatterie umfasst.

9. Eislaufbahn nach einem der vorstehenden Ansprüche, **dadurch gekennzeichnet, dass** die Kühlvorrichtung (9) dazu konfiguriert ist, mindestens zum Teil von den Fotovoltaikmodulen (15) und/oder von der Speicherbatterie versorgt zu werden.

## Claims

1. Covered artificial skating rink (1) composed of a closed building built over a slab (5) intended to be covered with ice, the skating rink (1) comprising:
- a refrigeration device (9) connected to a refrigerant network (11) wherein a refrigerant fluid circulates;
- a phase-change material (13) connected to said refrigeration device (9) via said refrigerant network (11);
said phase-change material (13) being configured to keep the ice (7) covering the slab at a temperature below the melting point of the ice.
**characterized in that** the slab (5) comprises at least two layers:
- a first support layer (20) intended to be covered with ice;
- a second layer (30) comprising said phase-change material (13).

2. Skating rink (1) according to any one of the preceding claims, **characterized in that** the first layer (20) rests directly on said second layer (30).

3. Skating rink according to claim 1, **characterized in that** said slab (5) comprises a third layer (40), referred to as intermediate layer, separating the first layer (20) from the second layer (30).

4. Skating rink according to claim 3, **characterized in that** the third layer (40) itself comprises two levels:
- a first level (42) which is made of a high-strength construction material and which is traversed by tubes forming said refrigerant network;
- a second level (44) made of a heat-conducting material, said second level (44) being inserted between the second layer (30) and the first level (42).

5. Skating rink (1) according to any one of claims 2 to 4, **characterized in that** the refrigeration network comprises one or more tubes (11a), 11) passing through said second layer (30) and/or third layer (40).

6. Skating rink (1) according to any one of the preceding claims, **characterized in that** the phase-change material (13) has a melting point between -5°C and -25°C, and preferably between -10°C and -20°C.

7. Skating rink (1) according to any one of the preceding claims, **characterized in that** the skating rink (1) comprises photovoltaic panels (15) intended to electrically power said refrigeration device (9).

8. Skating rink (1) according to any one of the preceding claims, **characterized in that** it comprises an electrical storage battery.

9. Skating rink according to any one of the preceding claims, **characterized in that** the refrigeration device (9) is configured to be powered at least in part by said photovoltaic panels (15) and/or by said storage battery.
